# EUROPEAN PATENT SPECIFICATION

(11) **EP 2 005 294 B1**
(45) Date of publication and mention of the grant of the patent: **04.09.2019**
(21) Application number: 06739823.0
(22) Date of filing: 27.03.2006
(51) Int. Cl.: G06F 9/445

(54) **WIRELESS EMAIL COMMUNICATIONS SYSTEM PROVIDING RESOURCE UPDATING FEATURES AND RELATED METHODS**
DRAHTLOSES EMAIL-KOMMUNIKATIONSSYSTEM ZUR BEREITSTELLUNG VON BETRIEBSMITTELAKTUALISIERUNGSMERKMALEN UND DIESBEZÜGLICHE VERFAHREN
SYSTÈME DE TRANSMISSION SANS FIL DE COURRIELS FOURNISSANT DES CARACTÉRISTIQUES DE MISES À JOUR DE RESSOURCES ET PROCÉDÉS APPARENTÉS

(43) Date of publication of application: 24.12.2008
(73) Proprietor: BlackBerry Limited, Waterloo, ON N2K 0A7 (CA)
(72) Inventor: PROVO, Nathan, Ravensdale, Washington 98051 (US)
(74) Representative: Roberts, Gwilym Vaughan
(86) International application number: PCT/US2006/011260
(87) International publication number: WO 2007/111599

(56) References cited:
- WO-A2-02/33542
- US-A1- 2002 131 404
- US-A1- 2005 149 922
- US-A1- 2006 010 196

## Description

### Field of the Invention

The present invention relates to the field of communications systems, and, more particularly, to wireless electronic mail (email) communications systems and related methods.

### Background of the Invention

Electronic mail (email) has become an integral part of business and personal communications. As such, many users have multiple email accounts for work and home use. Moreover, with the increased availability of mobile cellular and wireless local area network (LAN) devices that can send and receive emails, many users wirelessly access emails stored in source mailboxes of different email storage servers (e.g., corporate email storage server, Yahoo, Hotmail, AOL, etc.).

As wireless communications networks bring on-line increasing numbers of devices that send and receive wireless emails, the ability to update network resources without interruption to network service becomes more challenging. This is particularly true as wireless LAN and cellular communications capabilities continue to expand and reach new countries and regions, as email service resources then have to be provided in multiple language formats. Moreover, it also becomes challenging for email distribution systems which may route messages to and from many different wireless communications networks to deploy updated language or other content across different network platforms.

Various attempts have been made in the prior art to more readily facilitate updating software resources between different computer systems. By way of example, U.S. Patent Publication No. 2005/0149922 is directed to a dynamic software update system in which a subscription request is sent to a publish/subscribe server for receiving updates to the computer application. An update notification or an update is received from the publish/subscribe server, and the update is dynamically applied to the computer application during execution without restarting the computer application. In one embodiment, the update notification is received from the publish/subscribe server, a request for the update is sent to a second server, and the update is received from the second server.

While such systems may be advantageous for relatively straight forward computer software updates, further resource development quick capabilities may be required when updating different types of content across multiple network platforms, for example.

US2006/0010196 is directed to portal federated applications. A customer portal application can reference a module. The files of the module can be combined with the files of the customer portal application wherein the files of the customer portal application take precedence. A reference to the module by the portal application can cause the module to be deployed. A Federated application for use with a server product that can be used with the system of one embodiment of the present invention can be configured to use both modules created for the applications as well as library modules which perform commonly used functions. The modules can be stored separately for deployment when utilised by applications, and a descriptor of the internal modules and references can be configured.

The invention is defined in the independent claims. Some optional features of the invention are defined in the dependent claims.

### Brief Description of the Drawings

FIG. 1 is a schematic block diagram of a wireless communications system in accordance with the present invention.
FIG. 2 is a schematic block diagram of a resource deployment package used in the system of FIG. 1
FIG. 3 is a schematic block diagram of an embodiment of the resource deployment server of FIG. 1.
FIG. 4 is a schematic block diagram of an embodiment of a deployment service module of the resource deployment server of FIG. 3.
FIG. 5 is a flow diagram illustrating a method in accordance with the present invention.
FIG. 6 is a schematic block diagram illustrating exemplary components of a mobile wireless communications device for use with the present invention

### Detailed Description of the Preferred Embodiments

The present description is made with reference to the accompanying drawings, in which preferred embodiments are shown. However, many different embodiments may be used, and thus the description should not be construed as limited to the embodiments set forth herein- Rather, these embodiments are provided so that this disclosure will be thorough and complete. Like numbers refer to like elements throughout.

Generally speaking, a wireless communications system is disclosed herein which may include a plurality of wireless communications networks and a plurality of mobile wireless communications devices for sending and receiving wireless electronic mail (email) messages over the wireless communications networks. The system may further include a resource deployment server for storing a plurality of resource deployment packages (RDPs), where each RDP includes deployment content and deployment instructions therefor relating to sending and receiving email messages. The resource deployment server may also be for dynamically deploying RDPs to the wireless communications networks to update deployment content thereof based upon the respective deployment' instructions.

More particularly, the resource deployment server may notify the wireless communications networks of available RDPs. The resource deployment server may also include a database module and a deployment service module cooperating therewith for storing the RDPs and deploying the RDPs to the wireless communications networks. The resource deployment server may also include a plurality of proxy modules for interfacing with respective wireless communications networks, and a World Wide Web Distributed Authoring and Versioning (WebDAV) interface for communicating with the proxy modules. In addition, the resource deployment server may further include a cache for storing a directory of available RDPs.

The deployment content may include language-specific content for a plurality of different languages. Moreover, at least one of the RDPs may be specific to ,a given wireless communications network. The deployment instructions may include Extensible Markup Language (XML) code, for example.

A wireless communications method aspect may include storing a plurality of resource deployment packages (RDPs) on a resource deployment server. Each RDP may include deployment content and deployment instructions therefor relating to sending and receiving email messages between a plurality of mobile wireless communications devices and a plurality of wireless communications networks. The method may further include dynamically deploying RDPs from the resource deployment server to the wireless communications networks tc update deployment content thereof based upon the respective deployment instructions.

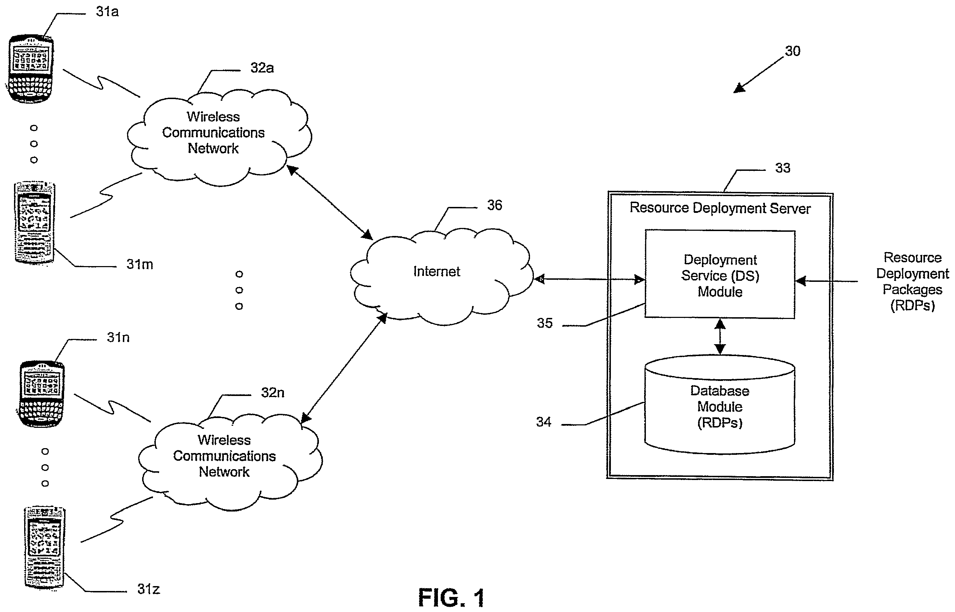

Referring initially to FIG. 1, a wireless communications system **30** illustratively includes a plurality of wireless communications networks **32a, 32n,** and a respective plurality of mobile wireless communications devices **31a-31m, 31n-31z** for sending and receiving wireless electronic mail (email) messages over the wireless communications networks. More particularly, in the cellular communications context, each wireless communications network **32** corresponds to a cellular carrier network (e.g., TMobile, Cingular, Verizon, etc.), and may include not only the wireless communications infrastructure (cell towers, etc.), but also the "fixed" infrastructure for interfacing landline (e.g., PSTN) phone networks, email relay systems (e.g., via the Internet/WWW), etc., as will be appreciated by those skilled in the art. However, in some implementations the wireless communications networks may be wireless Local area networks (LANs), etc., as will be appreciated by those skilled in the art. By way of example, the mobile wireless cellular communications devices **31a-31m, 31n-31z** may be phones or personal digital assistant (PDA) devices which are able to send/receive emails over respective networks **32a, 32n,** as will also be appreciated by those skilled in the art.

The system **30** further illustratively includes a resource deployment server **33.** The resource deployment server **33** illustratively includes a database module **34** and one or more deployment service (DS) modules **35** cooperating therewith for storing a plurality of resource deployment packages (RDPs), and deploying the RDPs to the wireless communications networks **32a-32n.** By way of example, the resource deployment server **33** may interface with the wireless communications networks **32a-32n** via a wide area network, such as the Internet **36.**

In particular., each RDP includes deployment content and deployment instructions therefor relating to sending and receiving email messages, as will be discussed further below. The DS module **35** dynamically deploys RDPs to the wireless communications networks to update deployment content thereof based upon the respective deployment instructions, as will also be discussed further below..

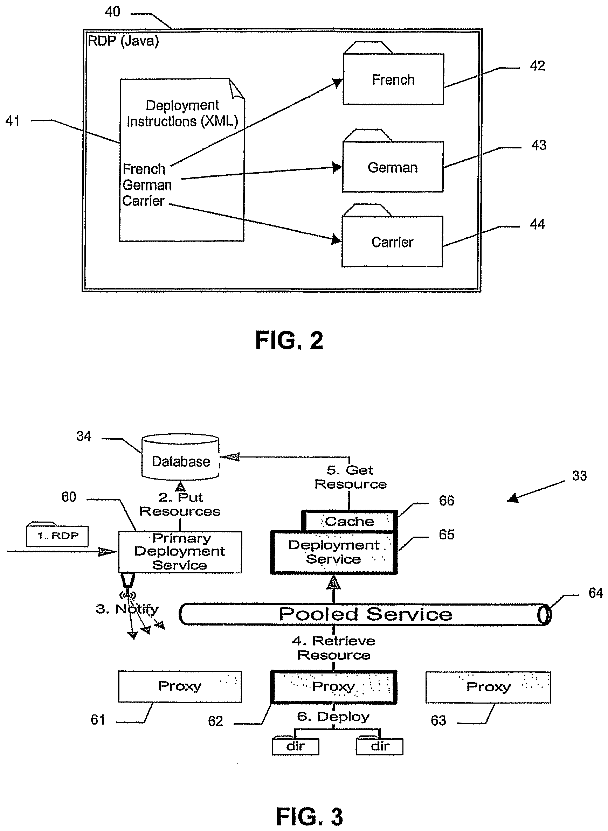

Turning now additionally to FIGS. 2-4, an exemplary resource deployment server **33** implementation will now be described. The resource deployment server **33** may advantageously enable new languages and wireless communications network resources to be deployed efficiently without requiring component restarts using dynamic deployment of such .resources. Generally speaking, each RDP may be a Java package or bundle which includes language specific text or images for use in generating templates, carrier specific software files, images, etc., as well as other resources which may be common to all carrier platforms. For Java packages, the non-carrier specific strings are stored following java resource file naming conventions. However, it should be noted that formats other than Java may be used for creating the RDPs, as will be appreciated by those skilled in the art.

In the example described below, non-carrier specific (i.e., non-branded) resource packets are located in a directory com.server.resources, and these resource packets may include text that is resolved at template translation time. Moreover, resource bundles may also be located within various proxy packages that use them. Such resource bundles may include localized text that is resolved during action handler execution. For example, the text may be injected into an XML document which will be processed by an Extensible Stylesheet Language Transformation (XSLT) to generate localized content. An exemplary list of directories for non-carrier specific bundles is as follows:
com.server.proxy.resource\prov.properties;
com.server.proxy.resource\proxy.properties;
com.server.proxy.html.resource\html.properties;
com.server.proxy.html.resource.ppc\prov.properties;
com.server.proxy.webdav.bda.resource\bda.properties;
com.server.proxy.webdav.davmgmt.resource\davmgmt.pro perties;
com.server.proxy.admin.resource\admin.properties;
com.server.proxy.pop.resource\pop.properties; and
com.server.proxy.wap.resource\wap-properties.

Additionally, specific carrier resource (i.e., a branded resource) bundles or packages may also be included which, if present, override the common non-carrier specific resources listed above. For example:
com.server.proxy.webdav.davmgmt.resource.carrier\davmgmt .properties;
com.server.proxy.resource.carrier\prov.properties; and
com.server.proxy.resource.carrier\proxy.properties.

When loading a named text string within a named package, the following package precedents may be used to load the string:
1. com.server.proxy.[app].resource.[device].[bundle]
2. com.server.proxy.[app].resource.[brand].[bundle]
3. com.server.proxy.[app].resource.[bundle]
4. com.server.proxy.resource.[device].[bundle]
5. com.server.proxy.resource.[brand].[bundle]
6. com.server.proxy.resource.[bundle]

A particular carrier brand may include a variety of resources such as templates, images, java resource bundles, and terms and conditions. Brand resources may be located within the configured brand directory, under which there is a particular subdirectory for each brand, e.g., [BrandDir]\[Carrier]. Of course, it should be noted that other directory designations and file arrangements may be used besides those set forth in the present example.

A particular brands subdirectory may also be used that includes subdirectories for each application (e.g., HTML) under which there may be one or more mobile wireless communications device subdirectories. Templates located in these directories may advantageously override those found in a configure template -directory, if desired. There may also exist additional templates that extend the base application functionality, as will be: appreciated by those skilled in the art. In addition, within a particular brand directory there may be an image directory called "images" including localized images.

Currently localized terms and conditions for the carrier, mobile wireless communications device provider, email service provider, etc. may be located within a subdirectory of the brand. Each term and condition may be a text file with hardcoded names, e.g.:
[branddir]\[brand]\bda\en\termsandconditions.txt; and
[branddir] \[brand]\bda\en\carriertandc.txt.

Each brand is preferably configured with a ; particular scheme. Schemes are located with a proxy configured scheme directory. Scheme directories may include non-localized cascading style sheet (CSS) files, as well as localized images, and schemes may be shared by multiple brands.

An RDP may be used to deploy multiple languages and/or carriers/brands. The RDP may be conceptually viewed as a "jar" which includes language and/or carrier resources.. The jar allows the resources to be organized and compressed for efficient deployment. Referring to FIG. 2, an exemplary RDP **40** illustratively includes a descriptor file **41** including deployment instructions for a set of French, German, and carrier specific resource files **42-44,** respectively. More particularly, the descriptor file **41** includes information about each resource file to be deployed. A resource file includes the resources for a particular language, carrier, etc., and contains the path information so it can be easily expanded into the resource consumer's (i.e., carrier's) file system, as discussed above.

The descriptor file **41** may include XML code which comprises deployment information for each resource jar or file within the RDP. An exemplary schema of the RDP descriptor file **41** is as follows:

```
 <?xml version="1.0" encoding="utf-8" ?>
 <xs:schema targetNamespace=""
 xmlns:xs="http://www.w3.org./2001/XMLSchema">
  <xs:element name="package">
    <xs:complexType>
      <xs:sequence>
        <xs:element name="Resource">
          <xs:complexType>
            <xs:attribute name="id" type="xs:ID" />
            <xs:attribute name="type"
            type="ResourceType" />
            <xs:attribute name="jar" type="xs:string"
            />
            <xs:attribute name="description"
            type="xs:string" />
            <xs:attribute name="dirPropKey"
            type="xs:string" />
          </xs:complexType>
        </xs>:element>
      </xs:sequence>
    </xs:complexType>
 </xs:element>
  <xs:simpleType name="ResourceType">
    <xs:restriction base="xs:string">
      <xs: enumeration value="language" />
      <xs:enumeration value="carrier" />
    </xs:restriction>
  </xs:simpleType>
  </xs:schema>
```

A resource element describes one resource file within the RDP **41,** and it may include attributes such as those set forth in Table 1, below.

**Table 1**

| **Attribute** | **Type** | **Description** |
|---|---|---|
| id | ID | Uniquely identifies a resource file. Each version of a particular language or carrier resource file will preferably have the same id. For example, each version of the French language resource file **42** should always have the same id. |
| type | ResourceType | This value may be either "language" or "brand", for example. |
| jar | string | The name of the resource file within the RDP **41.** |
| description | string | A human readable string describing the given resource file, e.g., "French Language" |
| dirPropKey | string | The name of the directory in which the resource consumer should expand the file into, e.g., "com.server.proxy.schemes" |

The following are exemplary XML deployment instructions for the resource files **42-44**. First, exemplary deployment instructions for the French resource file **42** are as follows:

```
  <package>
    <resource id="lang-fr" type="language" jar="fr"
    description="French"
      dirPropKey="server.proxy.resources.dir"/>
    <resource id="lang-fr-carrier" type="language"
    jar="fr-carrier"
      description="French Carrier"
    dirPropKey="server.proxy.resources.dir"/>
  </package>
```

Of course, the descriptor XML code for the German language file **43** would be similar to the French XML code. Exemplary descriptor XML code for the carrier file **44** (i.e., CarrierA) is as follows:

```
  <package>
    <deploy type="brand" id="br-CarrierA" jar="carrierA"
    desc="CarrierA wireless"
      dirProp="server.proxy.brand.directory"/>
  </package>
```

Exemplary RDP contents for the French language file **42** are as follows:

```
 rdp001.jar
  descriptor.xml
  fr.jar
    admin_fr.properties com.server.resources
    bda_fr.properties com.server.resources
    device_fr.properties com.server.resources
    calendar_fr.properties com.server.resources
    common_fr.properties com.server.resources
    defaultbrand_fr.properties com.server.resources
    carrier_fr.properties com.server.resources
  fr-carrier.jar
    prov.properties
                    com.server.proxy.resource,carrie
    r
    davmgmt.properties
    com.server.proxy.webdav.davmgmt.resource.carrier
    proxy.properties
    proxy.propertiescom.server.proxy.resource.carrier
```

The following are exemplary use cases that may be considered in the design of the resource deployment system. More particularly, these are use cases that the system may need to accommodate in certain implementations. However, it will be appreciated that not all of these exemplary use cases need to be accommodated in all embodiments, and other use cases may be accommodated as well. One exemplary use is when a new language or carrier needs to be added to the system. Another use case is when a new instance of a component is added to the .system that has little or no resources and needs to be able to retrieve missing resources.

Moreover, .a component may be "down" and therefore require re-starting. While the component is down it may miss one or more new resource notifications, and the component will preferably have the ability to check for updated RDPs and deploy the RDPs accordingly. Additionally, if an account is of carrier/brand X and that brand's resources are not present, then the appropriate resources will need to be retrieved or deployment. Another example is when a language or carrier resource has been modified, which requires a resource to be redeployed, either while the system is running or during a maintenance period, depending upon the particular resource. In addition, still another use case to consider is version consistency across components. More particularly, when a new version of a resource is introduced, it is generally desirable to make sure that different instances do not end up deploying different versions of resources.

Referring now to FIG. 3, an external system/process (e.g., programmers/developers) provide RDPs to a primary deployment service (DS) module **60** within the resource deployment server **33.** The primary DS module **60** makes the resources available and ensures that each component of the system (i.e., carriers) is made aware of the resource. To ensure a timely deployment of the resource, the appropriate components are preferably notified of the resource's existence. Moreover, these components may also poll the resource deployment server on a timely basis if notifications are not used, or example.

Notifications require that each interested party is known before hand, while polling may require more network resources. Accordingly, the particular choice for using polling and/or notifications will depend upon the given implementation. However, it should be noted that with a purely polling approach the primary deployment service module may potentially be eliminated. It should be noted the various components and modules of the resource deployment server 33 are shown as separate components within a single server for clarity of illustration. However, in some embodiments the functions of such components may be implemented by common hardware and/or software components, and the various functions may also be distributed across more than one server or computing platform, as will be appreciated by these skilled in the art.

Whenever a carrier component is added to the system or has been re-started, there exists a chance that this component does not have all the resources it requires. In such cases, the component may synchronize with the currently deployed updates. Such a process can be used to update resources during maintenance windows (shutdowns), when re-starting following a failure, when a brand resource is missing, or if polling is employed for new resource detection, for example.

The various components and processes used for deploying an RDP are now further described. First, an RDP is constructed and sent to the primary DS module **60,** as noted .above. The primary DS module **60** stores the RDPs in the database **34,** and notifies all interested proxies **61-63** of the new resources. One or more of the proxies **61-63** retrieves the resource via a deployment service pool **64.** By way of example, the deployment service pool **64** may include all instances of the DS modules. When a resource consumer has been notified of a new resource or has determined via the synchronization process that it needs, to retrieve a resource, it connects to a DS via load balancer ("BigIP") that will load balance the request to one of the DS modules where multiple DS modules are used.

A secondary DS module **65** checks its cache **66** for the requested RDP and, if it is not available in the cache, retrieves the RDP from the database **34** and caches it. Furthermore, the RDP is returned by the secondary DS module **65** to the given proxy via the deployment service pool **64,** and the given proxy then deploys the deployment content within the RDP based upon the deployment instructions.

One or more of the DS modules are preferably used by the resource consumers to retrieve resources, and it is done via a single IP, which is the BigIP pool that load-balances requests across all DS modules. The primary DS module 60 plays a special role in that consumers register with it to retrieve notifications of new resources, all RDPs are deployed via this DS module. The secondary DS module **65** plays a special role in that the primary DS module **60** forwards all RDPs deployed to it so that if the primary goes down the consumers and ether DS modules can still retrieve the resources. One or more. "cache only" DS modules may also be included which do not necessarily play any special role. A cache only DS module's only job is to simply retrieve resources for the consumer. If it does not have the resource in its cache it will retrieve it from the primary DS module **60**, and if the primary DS module is down then it will retrieve the resource from the secondary DS module **65.** Once the resource is retrieved it will be cached and returned to the resource consumer(s). All DS modules preferably have a cache **66,** although the primary DSmodule cache is not shown in FIG. 3 for clarity of illustration. It should also be noted that while the various components cf the system illustrated in FIG. 3 are shown as separate components, they may in fact be implemented using common hardware (e.g., memories, processors) and software, and the DS modules may all have substantially the same structures in some embodiments although they may be assigned special tasks as noted above. As such, various numbers of DS modules can be used to advantageously provide scalability based upon the particular implementation.

The RDP may be sent to the primary DS module via a console, script or utility application, for example. More particularly, two specific mechanisms that may be used for delivery of RDPs to the primary DS module are as follows. First, a client tool may "rcopy" the RDP to a well-known deployment directory. The primary DS module **60** may then detect the RDP and begin the deployment process, as discussed further above. By way of example, the client tool may use a World Wide Web Distributed Authoring and Versioning (WebDAV) interface **67** implemented by the secondary DS module **65** to send the RDP, which starts the deployment process. Of course, it will be appreciated by those skilled in the art that other deployment mechanisms may also be used. Moreover, a registry **68** may also communicate with the WebDAV interface **67** and proxies **61-63** to perform register and notify operations, as shown.

As noted above, the DS modules **60, 65** are responsible for receiving RDPs, persisting resources, notifications to interested components, retrieving resources, and providing synchronization information, for example. A container **69** may advantageously be used in some embodiments to provide an environment for the DS. modules **60, 65** to execute. By way of example, the container **69** may be a Simple Object Access Protocol (SOAP) servelet. A SOAP servelet may advantageously provide an HTTP listener for a WebDAV request, as well as a pool of database connections. Moreover, since the SOAP servelet is a pooled resource, the DS module(s) becomes a pooled resource as well.

The cache **66** stores resources locally within the DS module **65.** If the requested resource does not exist in the cache **66,** then it is retrieved from the database **34,** as noted above. The resources may be stored in a configured directory as RDPs, for example. An index is also preferably created that tracks which resources are in the cache **66.** The cache **66** also provides mechanism that returns a set of existing resources, which utilizes a query to the database **34.** This will enable a synchronization request to be completed, as will be appreciated by those skilled in the art.

The container **69** may be configured to route WebDAV requests to the database **34.** The WebDAV component **67** processes the request, which may be one of three, for example. The first request may be a "put" RDP request, which stores an RDP in the local cache **66** and in the database **34,** and the registry is notified accordingly-The second request is a retrieve resource request, which for a given resource key retrieves the appropriate resource. The third request is a synchronize request. A search of the root folder will return a list identifying available resources. The list will include the resource ID and its version ID. The client (e.g., carrier network component) will use this information to determine which resources to download.

Each component interested in receiving new resources may register with the primary DS module **60.** Registration may simply .include keeping a socket open via which notifications can be sent, as will be appreciated by those skilled in the art. A notification may include a WebDAV Uniform Resource Identifier (URI) to retrieve an RDP, for example.

The database **34** is used to persist and propagate resources on-demand to other deployment service instances. By way of example, a resource table(s) may be created that stores the following information:

| Name | Type |
|---|---|
| id (unique,key) | X characters (e.g., 64) |
| versionid | long id |
| RDP | This may be a single jar with a descriptor file, or descriptor values may be added. |

Stored procedures may be created to store a resource, to retrieve a resource, and to retrieve a list of all resources.

By way of example, each resource consumer, such as the proxies **61-63,** may have the following responsibilities: (1) synchronize resources at startup; (2) maintain a registry of deployed resources; (3) listen for resource notifications; and (4) retrieve and deploy resources. In some instances, it may be desirable to deploy updated resources at scheduled maintenance periods when resource consumers will be stopped and started to avoid causing different versions of the same resource to be in-use at the same time.

The following steps may be taken to update resources to avoid this problem: (1) stop the service; (2) if using rcopy, then go to step 6; (3) start primary deployment service; (4) send updated RDPs via WebDAV; (5) go to step 8; (6) rcopy RDPs to the primary DS directory; (7) start the primary deployment service; and (8) restart the components, which will now synchronize their content. The updated resources may be introduced during a planned maintenance period during which the resource consumers may be restarted, for example.

From the foregoing description, it will be appreciated that the resource deployment system set forth herein may provide the following advantages. First, the resource deployment server **33** may dynamically deploy new languages. That is, it provides a relatively straightforward process for deploying a new language bundle to a running installation, without requiring the component to be restarted. The server 33 may also be used for dynamically deploying new carriers, as it provides a relatively straightforward process for introducing a new carrier bundle to a running installation, without requiring the component to be restarted. Moreover, it further provides centralized access to carrier RDPs, while providing a programmatic mechanism to retrieve and inspect a carrier bundle through the centralized service.

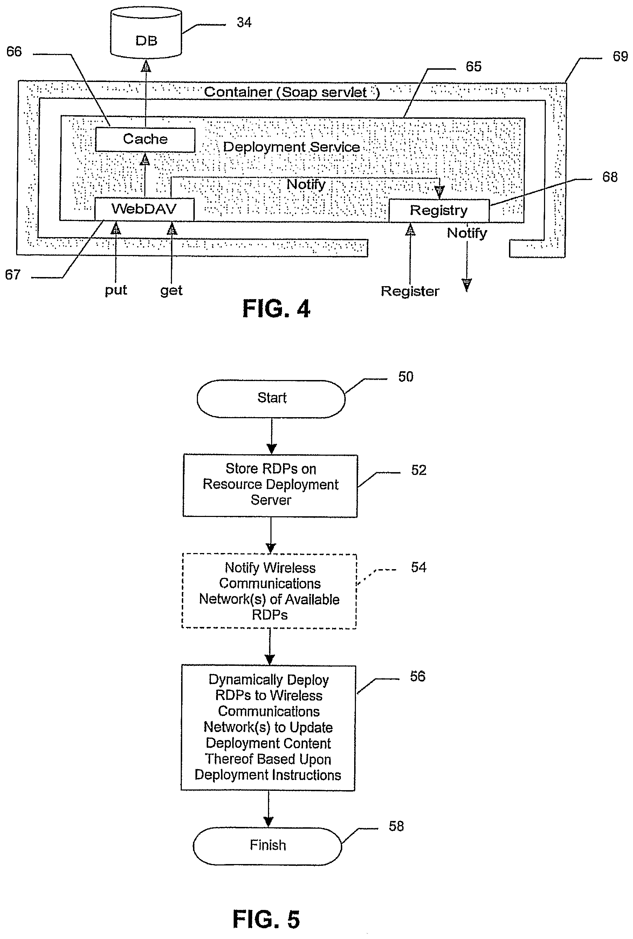

Turning now to FIG. 5, a wireless communications method aspect illustratively begins at Block 50 with storing a plurality of resource deployment packages (RDPs) on a resource deployment server 33, at Block **52.** Each RDP may include deployment content and deployment instructions therefor relating to sending and receiving email messages between a plurality of mobile wireless communications devices **31a-31m, 31n-31z** and a plurality of respective wireless communications networks **32a, 32n,** as noted above. The method further illustratively includes dynamically deploying RDPs from the resource deployment server **33** to the wireless communications networks **32a-32n** to update deployment content thereof based upon the respective deployment instructions, at Block **56,** thus concluding the illustrated method (Block **58**). As noted above, in some embodiments the resource deployment server **33** may optionally notify the wireless communications networks of available RDPs (Block **54**).

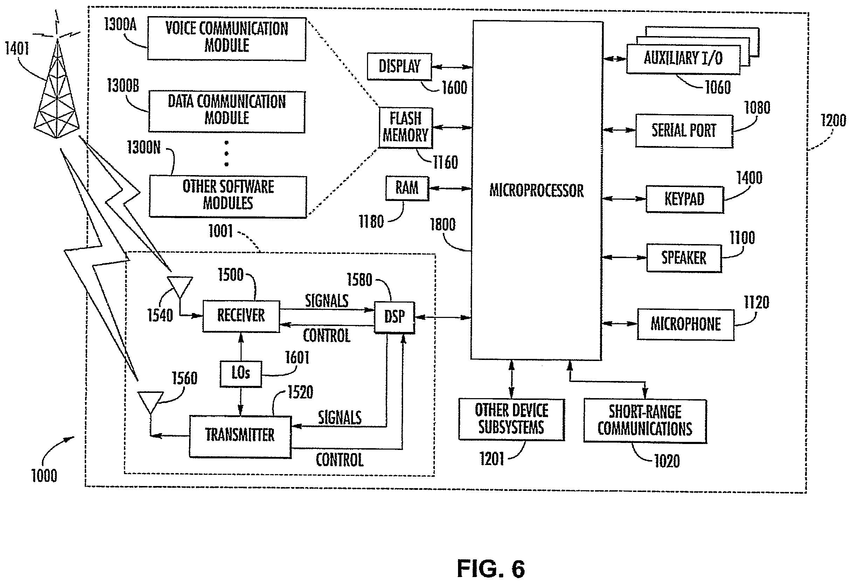

One example of a hand-held'mobile wireless communications device 1000 that may be used in accordance the system 20 is further described in the example below with reference to FIG. 6. The device 1000 illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** alone with other input/output devices **1060, 1080, 1100** and **1120;** as well as memory devices **1160, 1180** and various other device subsystems **1201.** The mobile device **1000** is preferably a.two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data .communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals, over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver 1500 and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The receivec signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data, items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone 1120. Alternative voice or audio I/O subsystems, such as a voice message recording subsystem, may also be implemented on the device 1000. In addition, the display 1600 may also be utilised in voice communications mode, for example to display the identity of a calling party, the duration of a voice call, or other voice call related information.
The short-range communications subsystem enables communication between the mobile device 1000 and other proximate systems or devices, which need not necessarily be similar devices. For example, the short-range communications subsystem may include an infrared device and associated circuits and components, or a Bluetooth TM communications module to provide for communication with similarly-enabled systems and devices.

## Claims

1. A wireless communications system (30) comprising:
a plurality of wireless communications networks (32a-32n) ;
a plurality of mobile wireless communications devices (31a-31n) for sending and receiving wireless electronic mail, email, messages over said wireless communications networks; and
a resource deployment server (33) comprising a database module (34) for storing a plurality of resource deployment packages, RDPs, each RDP comprising language specific and/or carrier specific deployment content and deployment instructions therefor relating to sending and receiving email messages, each RDP comprising a resource identifier;
said resource deployment server also comprising a plurality of deployment service modules (35) cooperating with the database module (34) for dynamically deploying RDPs to said wireless communications networks to update deployment content thereof based upon the respective deployment instructions and the resource identifier, wherein said resource deployment server is configured to notify said wireless communications networks of available RDPs; and
a load balancer configured to connect one of the plurality of service modules with one of the plurality of wireless communications networks for deploying RDPs to that wireless communication network;
wherein said wireless communication system further comprises a plurality of proxy modules (61, 62, 63) for interfacing with respective wireless communications networks.

2. The wireless communications system of Claim 1 wherein the deployment content comprises language-specific content for a plurality of different languages.

3. The wireless communications system of Claim 1 wherein at least one of the RDPs is specific to a given wireless communications network.

4. The wireless communications system of Claim 1 wherein said resource deployment server further comprises a World Wide Web Distributed Authoring and Versioning, WebDAV, interface (67) for communicating with said proxy modules.

5. The wireless communications system of Claim 1 wherein said resource deployment server further comprises a cache (66) for storing a directory of available RDPs.

6. The wireless communications system of Claim 1 wherein the deployment instructions comprise Extensible Markup Language, XML, code.

7. A wireless communications method comprising:
storing a plurality of resource deployment packages, RDPs, on a database of a resource deployment server (33), each RDP comprising language specific and/or carrier specific deployment content and deployment instructions therefor relating to sending and receiving email messages between a plurality of mobile wireless communications devices (31a-31n) and plurality of wireless communications networks (32a-32n), each RDP comprising a resource identifier; and
using plurality of deployment service modules (35) cooperating with the database module (34), dynamically deploying RDPs from the resource deployment server to the wireless communications networks via a plurality of proxy modules comprised in the resource development server to update deployment content thereof based upon the respective deployment instructions and the resource identifier, wherein the resource deployment server notifies the wireless communications networks of available RDPs,
and wherein a load balancer connects one of the plurality of service modules with one of the plurality of wireless communications networks for deploying RDPs to that wireless communication network.

8. The method of Claim 7 wherein the deployment content comprises language-specific content for a plurality of different languages.

9. The method of Claim 8 wherein at least one of the RDPs is specific to a given wireless communications network.

10. The method of Claim 8 wherein the deployment instructions comprise Extensible Markup Language, XML, code.

## Patentansprüche

1. Drahtloses Kommunikationssystem (30), umfassend:
mehrere drahtlose Kommunikationsnetzwerke (32a-32n) ;
mehrere mobile drahtlose Kommunikationsvorrichtungen (31a-31n) zum Senden und Empfangen von drahtlosen elektronischen Mail-, E-Mail-, Nachrichten über die drahtlosen Kommunikationsnetzwerke; und
einen Ressourcen-Bereitstellungsserver (33), der ein Datenbankmodul (34) zum Speichern mehrerer Ressourcen-Bereitstellungspakete, RDPs, umfasst, wobei jedes RDP sprachspezifischen und/oder Carrier-spezifischen Bereitstellungsinhalt und Bereitstellungsanweisungen dafür umfasst, die sich auf das Senden und Empfangen von E-Mail-Nachrichten beziehen, wobei jedes RDP eine Ressourcenkennung umfasst;
der Ressourcen-Bereitstellungsserver auch mehrere Bereitstellungsservicemodule (35) umfassend, die mit dem Datenbankmodul (34) kooperieren, um dynamisch RDPs an die drahtlosen Kommunikationsnetzwerke bereitzustellen, um den Bereitstellungsinhalt davon aufgrund der jeweiligen Bereitstellungsanweisungen und der Ressourcenkennung zu aktualisieren, wobei der Ressourcen-Bereitstellungsserver zum Benachrichtigen der drahtlosen Kommunikationsnetzwerke über verfügbare RDPs konfiguriert ist; und
einen Load Balancer, der zum Verbinden eines der mehreren Servicemodule mit einem der mehreren drahtlosen Kommunikationsnetzwerke zum Bereitstellen von RDPs an dieses drahtlose Kommunikationsnetzwerk konfiguriert ist;
wobei das drahtlose Kommunikationssystem ferner mehrere Proxy-Module (61, 62, 63) zum Anschließen an entsprechende drahtlosen Kommunikationsnetzwerken umfasst.

2. Drahtloses Kommunikationssystem nach Anspruch 1, wobei der Bereitstellungsinhalt sprachspezifischen Inhalt für mehrere verschiedene Sprachen umfasst.

3. Drahtloses Kommunikationssystem nach Anspruch 1, wobei mindestens eines der RDPs für ein gegebenes drahtloses Kommunikationsnetzwerk spezifisch ist.

4. Drahtloses Kommunikationssystem nach Anspruch 1 wobei der Ressourcen-Bereitstellungsserver ferner eine World Wide Web Distributed Authoring and Versioning-, WebDAV-, Schnittstelle (67) zum Kommunizieren mit den Proxy-Modulen umfasst.

5. Drahtloses Kommunikationssystem nach Anspruch 1 wobei der Ressourcen-Bereitstellungsserver ferner einen Cache (66) zum Speichern eines Verzeichnisses verfügbarer RDPs umfasst.

6. Drahtloses Kommunikationssystem nach Anspruch 1, wobei die Bereitstellungsanweisungen Extensible Markup Language-, XML-, Code umfassen.

7. Drahtloses Kommunikationsverfahren, umfassend:
Speichern mehrerer Ressourcen-Bereitstellungspakete, RDPs, in einer Datenbank eines Ressourcen-Bereitstellungsservers (33), wobei jedes RDP sprachspezifischen und/oder Carrier-spezifischen Bereitstellungsinhalt und Bereitstellungsanweisungen dafür umfasst, die sich auf das Senden und Empfangen von E-Mail-Nachrichten zwischen mehreren mobilen drahtlosen Kommunikationsvorrichtungen (31a-31n) und mehreren drahtlosen Kommunikationsnetzwerken (32a-32n) beziehen, wobei jedes RDP eine Ressourcenkennung umfasst; und
Verwenden mehrerer Bereitstellungsservicemodule (35), die mit dem Datenbankmodul (34) kooperieren, dynamisches Bereitstellen von RDPs vom Ressourcen-Bereitstellungsserver an die drahtlosen Kommunikationsnetzwerke über mehrere Proxy-Module, die im Ressourcen-Entwicklungsserver enthalten sind, um Bereitstellungsinhalt davon aufgrund der jeweiligen Bereitstellungsanweisungen und der Ressourcenkennung zu aktualisieren, wobei der Ressourcen-Bereitstellungsserver die drahtlosen Kommunikationsnetzwerke über verfügbare RDPs benachrichtigt,
und wobei ein Load Balancer eines der mehreren Servicemodule mit einem der mehreren drahtlosen Kommunikationsnetzwerke zum Bereitstellen von RDPs an dieses drahtlose Kommunikationsnetzwerk verbindet.

8. Verfahren nach Anspruch 7, wobei der Bereitstellungsinhalt sprachspezifischen Inhalt für mehrere verschiedene Sprachen umfasst.

9. Verfahren nach Anspruch 8, wobei mindestens eines der RDPs für ein gegebenes drahtloses Kommunikationsnetzwerk spezifisch ist.

10. Verfahren nach Anspruch 8, wobei die Bereitstellungsanweisungen Extensible Markup Language-, XML-, Code umfassen.

## Revendications

1. Système de communications sans fil (30) comprenant :
une pluralité de réseaux de communications sans fil (32a-32n) ;
une pluralité de dispositifs de communications sans fil mobiles (31a-31n) pour envoyer et recevoir des messages de courrier électronique, courriel, sans fil sur lesdits réseaux de communications sans fil ; et
un serveur de déploiement de ressource (33) comprenant un module de base de données (34) pour stocker une pluralité de packages de déploiement de ressource, RDP, chaque RDP comprenant un contenu de déploiement spécifique à une langue et/ou spécifique à un opérateur et des instructions de déploiement pour cela relatives à l'envoi et à la réception de messages de courriel, chaque RDP comprenant un identificateur de ressource ;
ledit serveur de déploiement de ressource comprenant également une pluralité de modules de service de déploiement (35) coopérant avec le module de base de données (34) pour déployer dynamiquement des RDP vers lesdits réseaux de communications sans fil afin de mettre à jour leur contenu de déploiement sur la base des instructions de déploiement respectives et de l'identificateur de ressource, où ledit serveur de déploiement de ressource est configuré pour notifier auxdits réseaux de communications sans fil des RDP disponibles ; et
un équilibreur de charge configuré pour connecter l'un de la pluralité de modules de service avec l'un de la pluralité de réseaux de communications sans fil pour déployer des RDP vers ce réseau de communication sans fil ;
où ledit système de communication sans fil comprend en outre une pluralité de modules mandataires (61, 62, 63) pour s'interfacer avec des réseaux de communications sans fil respectifs.

2. Système de communications sans fil selon la revendication 1, dans lequel le contenu de déploiement comprend un contenu spécifique à une langue pour une pluralité de langues différentes.

3. Système de communications sans fil selon la revendication 1, dans lequel au moins l'un des RDP est spécifique à un réseau de communications sans fil donné.

4. Système de communications sans fil selon la revendication 1, dans lequel ledit serveur de déploiement de ressource comprend en outre une interface World Wide Web Distributed Authoring and Versioning (auteurisation et versionnage distribués sur le Web), WebDAV, (67) pour communiquer avec lesdits modules mandataires.

5. Système de communications sans fil selon la revendication 1, dans lequel ledit serveur de déploiement de ressource comprend en outre un cache (66) pour stocker un répertoire de RDP disponibles.

6. Système de communications sans fil selon la revendication 1, dans lequel les instructions de déploiement comprennent un code de langage de balisage extensible, XML.

7. Procédé de communications sans fil comprenant les étapes consistant à :
stocker une pluralité de packages de déploiement de ressource, RDP, sur une base de données d'un serveur de déploiement de ressource (33), chaque RDP comprenant un contenu de déploiement spécifique à une langue et/ou spécifique à un opérateur et des instructions de déploiement pour cela relatives à l'envoi et à la réception de messages de courriel entre une pluralité de dispositifs de communications sans fil mobiles (31a-31n) et une pluralité de réseaux de communications sans fil (32a-32n), chaque RDP comprenant un identificateur de ressource ; et
utiliser une pluralité de modules de service de déploiement (35) coopérant avec le module de base de données (34), déployer dynamiquement des RDP du serveur de déploiement de ressource aux réseaux de communications sans fil via une pluralité de modules mandataires compris dans le serveur de déploiement de ressource afin de mettre à jour leur contenu de déploiement sur la base des instructions de déploiement respectives et de l'identificateur de ressource, où le serveur de déploiement de ressource notifie auxdits réseaux de communications sans fil des RDP disponibles,
et dans lequel un équilibreur de charge connecte l'un de la pluralité de modules de service avec l'un de la pluralité de réseaux de communications sans fil pour déployer des RDP vers ce réseau de communication sans fil.

8. Procédé selon la revendication 7, dans lequel le contenu de déploiement comprend un contenu spécifique à une langue pour une pluralité de langues différentes.

9. Procédé selon la revendication 8, dans lequel au moins l'un des RDP est spécifique à un réseau de communications sans fil donné.

10. Procédé selon la revendication 8, dans lequel les instructions de déploiement comprennent un code de langage de balisage extensible, XML.
